# EUROPEAN PATENT SPECIFICATION

(11) **EP 1 620 852 B1**
(45) Date of publication and mention of the grant of the patent: **04.06.2014**
(21) Application number: 04728973.1
(22) Date of filing: 22.04.2004
(51) Int. Cl.: G11B 20/10, G11B 27/10, G11B 27/32

(54) **METHOD AND APPARATUS FOR SYNCHRONOUS REPRODUCTION OF MAIN CONTENTS RECORDED ON AN INTERACTIVE RECORDING MEDIUM AND ADDITIONAL CONTENTS THEREFOR**
VERFAHREN UND VORRICHTUNG ZUR SYNCHRONEN WIEDERGABE VON AUF EINEM INTERAKTIVEN AUFZEICHNUNGSMEDIUM AUFGEZEICHNETEN HAUPTINHALTEN UND ZUSÄTZLICHE INHALTE DAFÜR
PROCEDE ET APPAREIL POUR LA REPRODUCTION SYNCHRONE DE CONTENUS PRINCIPAUX ENREGISTRES SUR UN SUPPORT D'ENREGISTREMENT INTERACTIF ET DE CONTENUS SUPPLEMENTAIRES ASSOCIES

(30) Priority: 23.04.2003 US 464866 P; 28.04.2003 KR 2003026786
(43) Date of publication of application: 01.02.2006
(73) Proprietor: LG Electronics Inc., Youngdungpo-gu, Seoul 150-010 (KR)
(72) Inventor: YOO, Jea Yong, Seoul 135-270 (KR); YOON, Woo Seong, Namyangjoo-si, Kyonggi-do 472-744 (KR); KIM, Byung Jin, Sungnam, Kyunggi-do, 463-010 (KR); ALEXANDRE, Limonov, Seoul 137-784 (KR)
(74) Representative: Vossius & Partner
(86) International application number: PCT/KR2004/000922
(87) International publication number: WO 2004/095453

(56) References cited:
- EP-A1- 1 357 749
- WO-A-03/096175
- WO-A-2004/070723
- JP-A- 10 136 314
- JP-A- 11 098 467
- US-A1- 2002 053 805
- US-A1- 2003 049 017
- US-A1- 2004 120 695

## Description

### 1. TECHNICAL FIELD

The present invention relates to a method and apparatus for synchronous reproduction of main contents recorded on an interactive recording medium and additional contents therefor.

### 2. BACKGROUND ART

High-density optical disks capable of storing large amounts of high-quality digital video/audio data have been widely used. The DVD (digital versatile disk) is one example of these high-density optical disks.

The DVD includes a data stream recording area in which digital video contents are stored and a navigation data recording area in which navigation data required for playback control of the video contents is stored.

When a DVD is loaded into a DVD reproducing apparatus, the DVD reproducing apparatus first reads the navigation data recorded in the navigation data recording area and stores the navigation data in an internal memory. The DVD reproducing apparatus then reproduces the video contents recorded in the data stream recording area using the navigation data.

In the meantime, the development of new interactive DVDs is being progressing. Unlike the DVD, the interactive DVD (hereinafter referred to as iDVD) contains additional contents data related to the main A/V data recorded thereon.

The additional contents (also called ENAV data in iDVDs) generally comprises a document part including markup languages (e.g., XHTML or SMIL) and cascading style sheets and a data part including JPEG or PNG images, AC-3, MPEG, DTS, or SDDS audio data, MNG animation, and/or text.

Various additional contents pertaining to main A/V data recorded on a recording medium provides users more flexibility and thus allows the users to enjoy the main A/V contents more effectively.

The additional contents pertaining to the main contents recorded on a recording medium need to be the latest information. It may be possible to provide the additional contents through a broadband communications network (e.g., the Internet) as well as through the recording medium. An iDVD reproducing apparatus, therefore, is required to be able to play the main A/V data recorded thereon in synchronization with a part of additional contents provided from an external source if the part is intended for synchronized reproduction.

### 3. DISCLOSURE OF INVENTION

It is an object of the present invention to provide a method and apparatus for presenting main A/V data recorded on an interactive recording medium in synchronization with additional data pertaining to the main data after obtaining the additional data from an external source. The method and apparatus of the present invention in particular focuses on real-time additional contents.

Aspects of the present invention are defined in the appended claims.

### 4. BRIEF DESCRIPTION OF DRAWINGS

The above features and other advantages of the present invention will be more clearly understood from the following detailed description taken in conjunction with the accompanying drawings, in which:
FIG. 1 illustrates a block diagram of an embodiment of an interactive optical disk reproducing apparatus in accordance with the present invention;
FIG. 2 illustrates an embodiment of additional data to be presented together with main A/V data recorded on a recording medium;
FIGS. 3 and 4 illustrate exemplary embodiments of document parts of additional data in accordance with the present invention;
FIG. 5 illustrates an exemplary table structure created by analyzing additional data for presenting the additional data in synchronization with main data; and

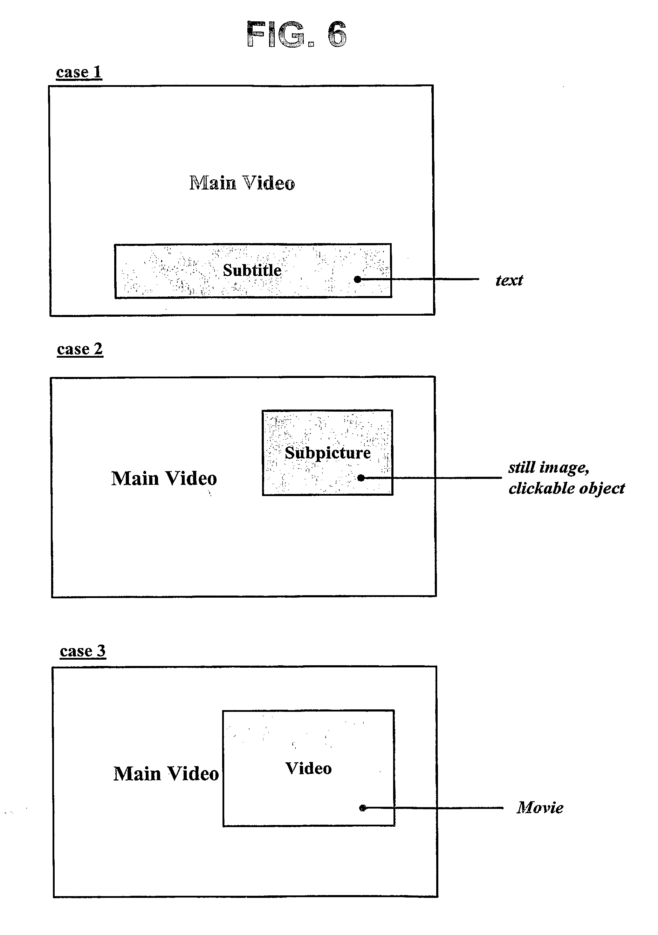

FIG. 6 illustrates an exemplary screen on which main data and additional data are displayed together.

### 5. MODES FOR CARRYING OUT THE INVENTION

In order that the invention may be fully understood, preferred embodiments thereof will now be described with reference to the accompanying drawings.

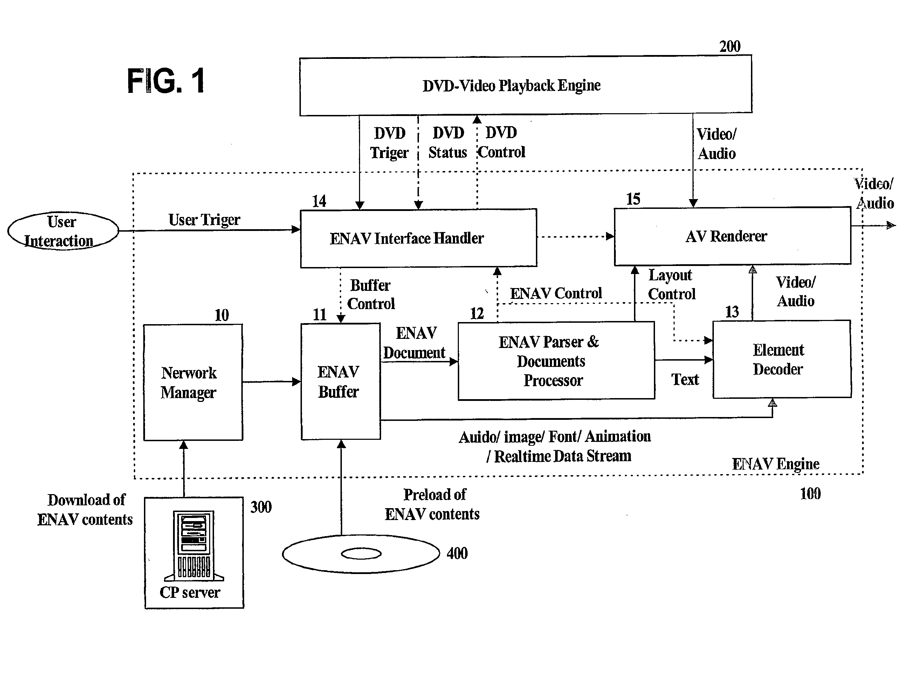

FIG. 1 illustrates a block diagram of an embodiment of an interactive optical disk reproducing apparatus in accordance with the present invention. The apparatus comprises a DVD-video playback engine 200 for reproducing main A/V data recorded on an iDVD 400 and an ENAV engine 100 for reproducing additional contents data. The ENAV engine 100 of the present invention comprises a network manager 10 for connecting to and communicating with an external network, an ENAV buffer 11 for storing ENAV data, an ENAV parser and documents processor 12 for separating the ENAV data into several components on an attribute basis and processing document parts, an element decoder 13 for decoding the ENAV data on an attribute basis, an ENAV interface handler 14 for processing and controlling inputs related to the ENAV data, and an A/V renderer 15 for outputting video data together with audio data after placing the video data on a video layer.

The network manager 10 downloads the latest data or selected data among various ENAV contents data related to the main contents recorded on the iDVD 400 from a contents providing server 300 and stores the data in the ENAV buffer 11. The ENAV buffer 11 may be loaded with ENAV contents recorded on the iDVD 400 prior to the playback of the main contents.

The element decoder 13 decodes audio, images, text, animation data, and/or real-time data streams (e.g., video streams) constituting the ENAV data on an attribute basis. The ENAV interface handler 14 controls the user input and the ENAV buffer 11, conducts operations required for the ENAV parser and documents processor 12, and exchanges signals (e.g., DVD trigger, DVD status, and DVD control) required for its operation with the DVD-video playback engine 200.

The contents providing server 300 stores additional contents data associated with main contents data of a plurality of iDVDs and provides additional contents pertaining to a selected iDVD or selected main A/V contents. The provided additional contents may be images, animation data, or real-time data streams. Real-time data streams, which require real-time playback, are subtitle streams including text or caption data, subpicture streams including still images or clickable objects, or video streams. The additional contents are downloaded through the network manager 10 and stored in the ENAV buffer 11.

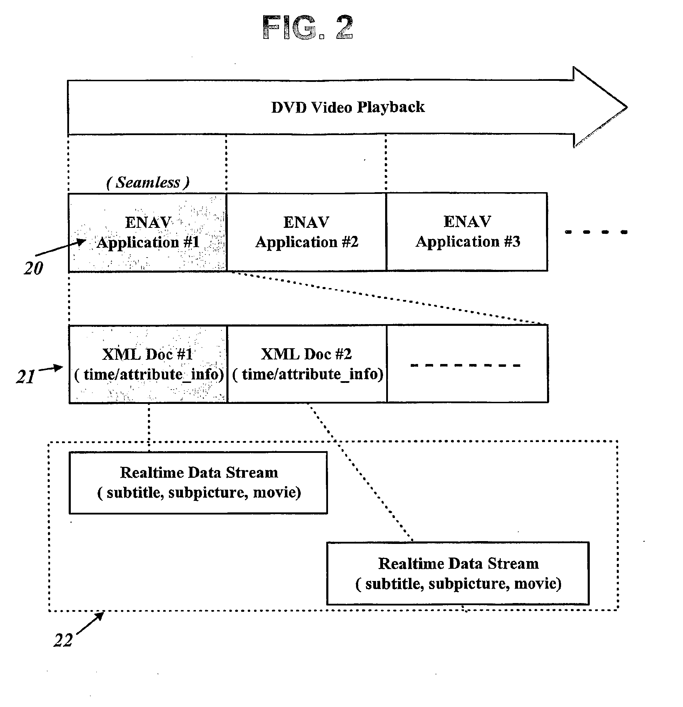

As shown in FIG. 2, the ENAV data provided from the contents providing server 300 comprises at least one ENAV application (ENAV Application #1, #2, #3, ···). The ENAV data may be pre-recorded on the iDVD 400 instead of being provided from the contents providing server 300. Even in this case, if ENAV data recorded thereon is not the latest version, the latest ENAV data may be downloaded from the contents providing server 300 and stored in the ENAV buffer 11.

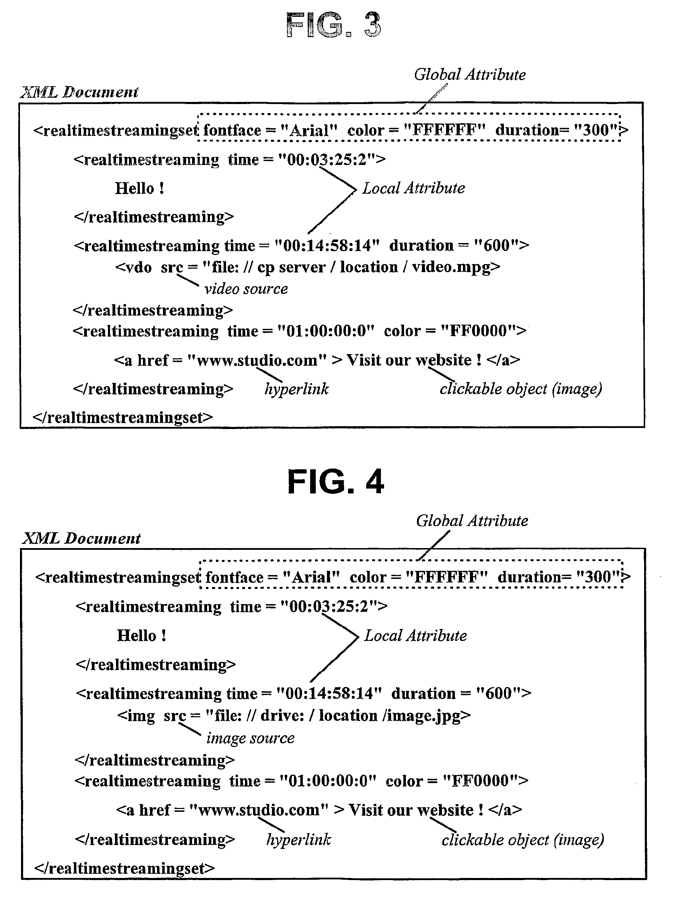

An ENAV application 20 comprises a document part 21 and a data part 22. As shown in FIGS. 3 and 4, the document part may be written in XML languages and the XML document contains link information for the additional contents (e.g., real-time data streams) and time/attribute information required for the presentation of the additional contents. The time information recorded in the XML document is indicative of the synchronization point of the main A/V data reproduced from the iDVD 400. For example, if the main A/V data comprises packetized elementary stream (PES) packets and each PES packet has a presentation time stamp (PTS), the PTS of a PES packet to be synchronized with a data part linked to an XML document or included in the XML document is recorded as the time information of the XLM document.

FIG. 3 illustrates an exemplary embodiment of the XML document in accordance with the present invention. At least one element <realtimestreaming> included in a root element <realtimestreamingset> specifies presentation attribute information (or link information) of the data part linked to the element or included in an XML document. In FIG. 3, the root element <realtimestreamingset> specifies fontface="Arial", color="FFFFFF" (white), and presentation duration="300" as the global attribute of the data part. Each of the included elements may also specify a local attribute, in which case the local attribute specified by the element overrides the global attribute specified by the root element.

In FIG. 3, the element <realtimestreaming> regarding a text "Hello !" specifies time="00:03:25:2" as the local time/attribute information of the corresponding data part ("Hello !"). The time information is in the format of hour:minute:second:frame. The unit of the frame depends on the frame rate of the stream, i.e., if the frame rate is 30 frames/sec, the value of 2 indicates 2/30 seconds. The time information determines the main A/V data to be presented simultaneously. The element <realtimestreaming> regarding a real-time video data file "video.mpg" specifies "file://cp server/location/video.mpg" as link information, time="00:14:58:14" as time/attribute information, and duration="600" as presentation duration information. The local attribute information takes precedence over the global attribute information. The video data file "video.mpg" will be presented for 600 seconds (or frames) from 14 minutes 58.467 seconds. If the total running time of the video data file is not as long as the duration, the video data is presented repeatedly during the presentation duration. Because the document is processed by the ENAV parser and documents processor 12 prior to the playback of the video data, the video data is downloaded from a location specified by the link information and stored in the ENAV buffer 11 prior to its playback. The element <realtimestreaming> regarding the clickable object comprising a hyperlink www.studio.com and a click test "Visit Our Website!" specifies time=01:00:00:0 and color="FF0000".

FIG. 4 illustrates an exemplary embodiment of an XML document that specifies image data instead of video data as its data part. In this case, the link information for the data part is specified as "file://drive/location/image.jpg", which indicates that the data part is already recorded on the recording medium iDVD 400. The remainder of the XML document is the same as that shown in FIG. 3.

The synchronized presentation of the main A/V data of the iDVD 400 and ENAV data thereof will now be described in detail.

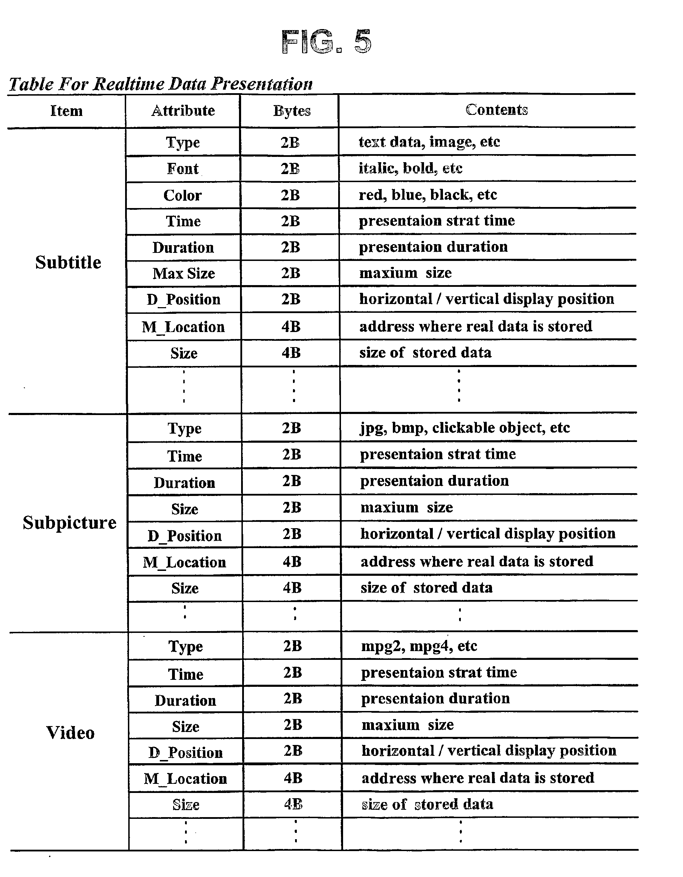

Receiving ENAV data, i.e., ENAV applications as shown in FIG. 2-4, the interactive optical disk reproducing apparatus of FIG. 1 stores the ENAV applications in the ENAV buffer 11. The ENAV parser and documents processor 12 analyze the stored ENAV applications one by one, constructs a table as shown in FIG. 5 for all data parts in each ENAV application, and stores it in the ENAV buffer 11. The table shown in FIG. 5 includes several elements arranged based on the element type, each item corresponding to an element. FIG. 5 illustrates three items, subtitle, subpicture, and video.

The subtitle item includes various fields such as the type, font, color, presentation time, presentation duration, maximum size, display position, memory location in which the data is stored, and data size. The type field stores information for indicating whether the subtitle is text data or image data. The information in each field may be either obtained by processing the received document, or preset according to the type of the item. The maximum size field is preset with a view to limiting the size of the image or video to be presented on a screen. During the presentation of ENAV data, the element decoder 13 limits the ENAV data to the maximum size if its actual size exceeds the maximum size.

The memory location field stores the physical address of the data (e.g., subtitle stream, subpicture stream, or video stream) stored in the buffer 11 or other storage devices based on the link information specified in the document. The data size field stores the size of the stored data.

The subpicture item has the same fields as the subtitle item except for font and color fields. The values of its fields in the subpicture item are obtained exactly as in the subtitle item. The type field stores information indicative of the type of the subpicture such as JPEG image data, BMP image data, or clickable object data. The type of the subpicture is identified from the extension of the file linked by the link information specified by the document.

The video item has the same fields as the subpicture item and the values of its fields are obtained exactly as in the subpicture item. The type field stores information indicative of the type of the video such as MPEG2 video data or MPEG4 video data. The type of the video data is identified from the extension of the file linked by the link information specified by the document.

Once the table as shown in FIG.5 is created in the ENAV buffer 11, the ENAV interface handler 14 starts playback of the iDVD 400 by sending a playback start signal to the DVD-video playback engine 200. Receiving the playback start signal, the DVD-video playback engine 200 decodes main A/V data reproduced from the iDVD 400 and outputs the decoded data to the A/V renderer 15. As soon as the playback starts, the DVD-video playback engine 200 sends a DVD trigger signal to the ENAV interface handler 14 for presentation synchronization.

The presentation time of each of the elements shown in FIG. 5 is calculated based on the DVD trigger signal. The ENAV interface handler 14 keeps track of time that has elapsed since the trigger point. If the value of the presentation time field of an element stored in the table coincides with the time, the ENAV interface handler 14 reads the data of the element (e.g., subtitle, subpicture, or video stream) from the buffer 11 or other storage devices and provides the data to the element decoder 13 in order that the data can be decoded.

Alternatively, the DVD-video playback engine 200 may provide the PTS included in each PES packet being decoded to the ENAV interface handler 14, which provides the data of an element the presentation time field of which is closest to the PTS value to the element decoder 13.

The A/V renderer 15 constructs a screen on which subtitle, subpicture, and video data decoded by the DVD-video playback engine 200 and the element decoder 13 are placed as specified by its coordinates. The position of the ENAV data is specified by the position information of the table as shown in FIG. 5 provided from the ENAV interface handler 14 or is obtained from the position information provided by the ENAV parser and documents processor 12 that interprets the document part stored in the buffer 11 during the reproduction of the iDVD 400.

The method in accordance with the present invention provides the user of an interactive recording medium with various services related to the contents of the recording medium by presenting the additional contents pertaining to the main contents in synchronization with the main contents.

While the invention has been disclosed with respect to a limited number of embodiments, those skilled in the art, having the benefit of this disclosure, will appreciate numerous modifications and variations therefrom.

## Claims

1. A method for reproducing a recording medium, comprising the steps of:
obtaining a document part of additional data related to the main data recorded on the recording medium from an external server through a communications network, wherein the additional data comprises a data part to be presented and the document part including control information for the data part, and the control information includes time information required for presentation of the data part and link information for linking the document part to the data part;
analyzing the document part;
receiving the data part selectively from any one of the external server and the recording medium based on the link information; and
presenting the data part in time synchronization with the main data by using the control information.

2. The method set forth in claim 1, wherein the step of obtaining comprises:
obtaining latest additional data is obtained from an external server through the communications network.

3. The method set forth in claim 1, wherein the data part is a real-time data stream including at least one of a subtitle stream, a sub-picture stream, and a video stream.

4. The method set forth in claim 1, wherein the document part is written in the XML and wherein the step of analyzing analyzes the XML document and the step of presenting includes utilizing the analyzed XML document to present the additional data.

5. The method set forth in claim 1, wherein the control information further includes presentation attribute information for the corresponding data part.

6. The method set forth in claim 1, wherein the control information further includes presentation duration information for the corresponding data part and presentation position information indicative of the position at which the corresponding data part will be presented.

7. The method set forth in claim 1, further comprising the steps of:
storing analysis result as a result of the step of analyzing in a storage medium other than the recording medium; and
obtaining a separate data file that is not included in the additional data from the recording medium or an external server.

8. The method set forth in claim 7, further comprising the step of adding information on the storage location and size of the data stored in the storage medium to the analysis result.

9. An apparatus for reproducing a recording medium comprising:
a data reproduction device configured to reproduce data recorded on the recording medium;
a communications device configured to connect to and communicate with an external communications network;
a main decoder configured to decode main data reproduced by the data reproduction device;
a controller configured to store additional data that is reproduced by the data reproduction device or received through the communications device in a storage device and to control the presentation time of the additional data, wherein the additional data comprises a data part to be presented and a document part including control information for the data part, and the control information includes the time information required for presentation of the data part and link information for linking the document part to the data part; and
a subdecoder configured to analyze and decode the additional data,
wherein the controller is configured to receive the data part from selectively any one of the external server and the recording medium based on the link information and to present the data part in time synchronization with the main data using the control information.

10. The apparatus set forth in claim 9, wherein the data part is a real-time data stream including at least one of a subtitle stream, a sub-picture stream, and a video stream.

11. The apparatus set forth in claim 9, wherein the control information further includes presentation attribute information for the corresponding data part, and
wherein the controller is configured to control the presentation of the data part based on the presentation attribute information.

12. The apparatus set forth in claim 9, wherein the data part is a PES packet defined in the MPEG standard.

13. The apparatus set forth in claim 9, wherein the additional data comprises at least one ENAV application.

14. The apparatus set forth in claim 9, wherein the controller is further configured to:
store an analysis result from the subdecoder in the storage medium other than the recording medium; and
obtaining a separate data file that is not included in the additional data from the recording medium or through the communication device.

15. The apparatus set forth in claim 14, wherein the controller is configured to further add information about the storage location and a size of the data to the analysis result.

16. The apparatus set forth in claim 14, further comprising:
a storage device configured to store the obtained additional data; wherein the controller is configured to cause the communications device to obtain the document part of additional data.

## Patentansprüche

1. Verfahren zur Wiedergabe eines Aufzeichnungsmediums, das die folgenden Schritte aufweist:
Gewinnen eines Dokumententeils mit zusätzlichen Daten, die sich auf die Hauptdaten beziehen, die auf dem Aufzeichnungsmedium aufgezeichnet sind, über ein Kommunikationsnetzwerk von einem externen Server, wobei die zusätzlichen Daten einen Datenteil aufweisen, der dargestellt werden soll, und der Dokumententeil Steuerinformationen für den Datenteil aufweist, und die Steuerinformationen Zeitinformationen, die für die Darstellung des Datenteils erforderlich sind, und Verknüpfungsinformationen zum Verknüpfen des Dokumententeils mit dem Datenteil aufweisen;
Analysieren des Dokumententeils;
selektives Empfangen des Datenteils von dem externen Server oder dem Aufzeichnungsmedium basierend auf den Verknüpfungsinformationen; und
mit den Hauptdaten zeitsynchronisiertes Darstellen des Datenteils unter Verwendung der Steuerinformationen.

2. Verfahren nach Anspruch 1, wobei der Gewinnungsschritt aufweist:
Gewinnen neuester zusätzlicher Daten, die von einem externen Server über das Kommunikationsnetzwerk gewonnen werden.

3. Verfahren nach Anspruch 1, wobei der Datenteil ein Echtzeitdatenstrom ist, der einen Untertitelstrom und/oder einen Unterbildstrom und/oder einen Videostrom aufweist.

4. Verfahren nach Anspruch 1, wobei der Dokumententeil in XML geschrieben ist, und wobei der Analyseschritt das XML-Dokument analysiert und der Darstellungsschritt das Nutzen des analysierten XML-Dokuments aufweist, um die zusätzlichen Daten darzustellen.

5. Verfahren nach Anspruch 1, wobei die Steuerinformationen ferner Darstellungsattributinformationen für den entsprechenden Datenteil aufweisen.

6. Verfahren nach Anspruch 1, wobei die Steuerinformationen ferner Darstellungsinformationen für den entsprechenden Datenteil und Darstellungspositionsinformationen aufweisen, welche die Position angeben, an der der entsprechende Datenteil dargestellt wird.

7. Verfahren nach Anspruch 1, das ferner die folgenden Schritte aufweist:
Speichern des Analyseergebnisses als ein Ergebnis des Analyseschritts in einem anderen Speichermedium als dem Aufzeichnungsmedium; und
Gewinnen einer getrennten Datendatei, die nicht in den zusätzlichen Daten enthalten ist, von dem Aufzeichnungsmedium oder einem externen Server.

8. Verfahren nach Anspruch 7, das ferner den Schritt des Hinzufügens von Informationen über die Speicherstelle und die Größe der in dem Speichermedium gespeicherten Daten zu dem Analyseergebnis aufweist.

9. Vorrichtung für die Wiedergabe eines Aufzeichnungsmediums, die aufweist:
eine Datenwiedergabevorrichtung, die konfiguriert ist, um auf dem Aufzeichnungsmedium aufgezeichnete Daten wiederzugeben;
eine Kommunikationsvorrichtung, die konfiguriert ist, um mit einem externen Kommunikationsnetzwerk zu verbinden und zu kommunizieren;
einen Hauptdecoder, der konfiguriert ist, um von der Datenwiedergabevorrichtung wiedergegebene Hauptdaten zu decodieren;
eine Steuerung, die konfiguriert ist, um zusätzliche Daten, die von der Datenwiedergabevorrichtung wiedergegeben oder durch die Kommunikationsvorrichtung empfangen werden, in einer Speichervorrichtung zu speichern und die Darstellungszeit der zusätzlichen Daten zu steuern, wobei die zusätzlichen Daten einen Datenteil, der dargestellt werden soll, und einen Dokumententeil, der Steuerinformationen für den Datenteil enthält, aufweisen, und wobei die Steuerinformationen die Zeitinformationen, die für die Darstellung des Datenteils benötigt werden, und die Verknüpfungsinformationen zum Verknüpfen des Dokumententeils mit dem Datenteil aufweisen; und
einen Subdecoder, der konfiguriert ist, um die zusätzlichen Daten zu analysieren und zu decodieren,
wobei die Steuerung konfiguriert ist, um den Datenteil selektiv von dem externen Server oder dem Aufzeichnungsmedium basierend auf den Verknüpfungsinformationen zu empfangen und den Datenteil unter Verwendung der Steuerinformationen zeitsynchron mit den Hauptdaten darzustellen.

10. Vorrichtung nach Anspruch 9, wobei der Datenteil ein Echtzeitdatenstrom ist, der einen Untertitelstrom und/oder einen Unterbildstrom und/oder einen Videostrom aufweist.

11. Vorrichtung nach Anspruch 9, wobei die Steuerinformationen ferner Darstellungsattributinformationen für den entsprechenden Datenteil aufweisen, und
wobei die Steuerung konfiguriert ist, um die Darstellung des Datenteils basierend auf den Darstellungsattributinformationen zu steuern.

12. Vorrichtung nach Anspruch 9, wobei der Datenteil ein PES-Paket ist, das in dem MPEG-Standard definiert ist.

13. Vorrichtung nach Anspruch 9, wobei die zusätzlichen Daten wenigstens eine ENAV-Anwendung aufweisen.

14. Vorrichtung nach Anspruch 9, wobei die Steuerung ferner konfiguriert ist, um:
ein Analyseergebnis von dem Subdecoder in dem anderen Speichermedium als dem Aufzeichnungsmedium zu speichern; und
eine getrennte Datendatei, die nicht in den zusätzlichen Daten enthalten ist, von dem Aufzeichnungsmedium oder durch die Kommunikationsvorrichtung zu gewinnen.

15. Vorrichtung nach Anspruch 14, wobei die Steuerung konfiguriert ist, um ferner Informationen über die Speicherstelle und eine Größe der in dem Speichermedium gespeicherten Daten zu dem Analyseergebnis hinzuzufügen.

16. Vorrichtung nach Anspruch 14, die ferner aufweist:
eine Speichervorrichtung, die konfiguriert ist, um die gewonnenen zusätzlichen Daten zu speichern; wobei die Steuerung konfiguriert ist, um zu bewirken, dass die Kommunikationsvorrichtung den Dokumententeil der zusätzlichen Daten gewinnt.

## Revendications

1. Procédé de reproduction d'un support d'enregistrement, comprenant les étapes suivantes :
obtention d'une partie documentaire de données supplémentaires à des données principales enregistrées sur le support d'enregistrement depuis un serveur externe, via un réseau de communication, les données supplémentaires comprenant une partie de contenus à présenter et la partie documentaire comportant une information de commande pour la partie de contenus, et ladite information de commande comportant une information temporelle requise pour la présentation de la partie de contenus et une information de liaison pour relier la partie documentaire à la partie de contenus ;
analyse de la partie documentaire ;
réception de la partie de contenus, sélectivement depuis soit le serveur externe, soit le support d'enregistrement sur la base de l'information de liaison ; et
présentation de la partie de contenus en synchronisation temporelle avec les données principales en exploitant l'information de commande.

2. Procédé selon la revendication 1, où l'étape d'obtention comprend :
l'obtention des données supplémentaires les plus récentes depuis un serveur externe via le réseau de communication.

3. Procédé selon la revendication 1, où la partie de contenus est un flux de données en temps réel comportant au moins soit un flux de sous-titres, soit un flux de sous-images, soit un flux vidéo.

4. Procédé selon la revendication 1, où la partie documentaire est écrite en XML et où l'étape d'analyse de la partie documentaire comprend l'analyse du document XML, et l'étape de présentation comprend l'exploitation du document XML analysé pour présenter les données supplémentaires.

5. Procédé selon la revendication 1, où l'information de commande comporte en outre la présentation d'une information d'attributs pour la partie de contenus correspondante.

6. Procédé selon la revendication 1, où l'information de commande comporte en outre la présentation d'une information de durée pour la partie de contenus correspondante et la présentation d'une information de position indicatrice de la position où la partie de contenus correspondante sera présentée.

7. Procédé selon la revendication 1, comprenant en outre les étapes suivantes :
mémorisation d'un résultat d'analyse de l'étape d'analyse sur un support de mémorisation autre que le support d'enregistrement ; et
obtention d'un fichier de données séparé non compris dans les données supplémentaires depuis le support d'enregistrement ou un serveur externe.

8. Procédé selon la revendication 7, comprenant en outre l'étape d'ajout au résultat d'analyse d'une information sur l'emplacement de mémorisation et la grandeur des données mémorisées sur le support de mémorisation.

9. Dispositif pour la reproduction d'un support d'enregistrement, comprenant :
un dispositif de reproduction de données configuré pour reproduire des données enregistrées sur le support d'enregistrement ;
un dispositif de communication configuré pour être connecté à, et communiquer avec un réseau de communication externe ;
un décodeur principal configuré pour décoder des données principales reproduites par le dispositif de reproduction de données ;
un contrôleur configuré pour mémoriser dans un dispositif de mémorisation des données supplémentaires reproduites par le dispositif de reproduction de données ou reçues par le dispositif de communication, et pour commander le temps de présentation des données supplémentaires, lesdites données supplémentaires comprenant une partie de contenus à présenter et une partie documentaire comportant une information de commande pour la partie de contenus, et l'information de commande comportant l'information temporelle requise pour la présentation de la partie de contenus et une information de liaison pour relier la partie documentaire à la partie de contenus ; et
un sous-décodeur configuré pour analyser et décoder les données supplémentaires,
le contrôleur étant configuré pour recevoir la partie de contenus sélectivement depuis soit le serveur externe, soit le support d'enregistrement sur la base de l'information de liaison, et pour présenter la partie de contenus en synchronisation temporelle avec les données principales en exploitant l'information de commande.

10. Dispositif selon la revendication 9, où la partie de contenus est un flux de données en temps réel comportant au moins soit un flux de sous-titres, soit un flux de sous-images, soit un flux vidéo.

11. Dispositif selon la revendication 9, où l'information de commande comporte en outre la présentation d'une information d'attributs pour la partie de contenus correspondante, et où le contrôleur est configuré pour commander la présentation de la partie de contenus sur la base de la présentation de l'information d'attributs.

12. Dispositif selon la revendication 9, où la partie de contenus est un paquet PES défini dans le standard MPEG.

13. Dispositif selon la revendication 9, où les données supplémentaires comprennent au moins une application ENAV.

14. Dispositif selon la revendication 9, où le contrôleur est en outre configuré pour :
mémoriser un résultat d'analyse du sous-décodeur sur le support de mémorisation autre que le support d'enregistrement ; et
obtenir un fichier de données séparé non compris dans les données supplémentaires depuis le support d'enregistrement ou via le dispositif de communication.

15. Dispositif selon la revendication 14, où le contrôleur est configuré pour ajouter en outre au résultat d'analyse une information sur l'emplacement de mémorisation et une grandeur des données.

16. Dispositif selon la revendication 14, comprenant en outre :
un dispositif de mémorisation configuré pour mémoriser les données supplémentaires obtenues ; le contrôleur étant configuré pour entraîner le dispositif de communication à obtenir la partie documentaire des données supplémentaires.
